# EUROPÄISCHE PATENTANMELDUNG

(11) **EP 4 368 859 A1**
(43) Veröffentlichungstag der Anmeldung: **15.05.2024**
(21) Anmeldenummer: 23194058.6
(22) Anmeldetag: 29.08.2023
(51) Int. Cl.: F16J 15/06, F16K 27/02

(54) **SANITÄRES EINBAUTEIL, DICHTVERBINDUNG UND SANITÄRARMATUR**

(30) Priorität: 08.11.2022 DE 202022106266 U
(71) Anmelder: Neoperl GmbH, 79379 Müllheim (DE)
(72) Erfinder: Oehler, Philipp, 79189 Bad Krozingen (DE); Fangmeier, Martin, 79424 Auggen (DE); Meyer, Burkhard, 79426 Buggingen (DE)
(74) Vertreter: Mertzlufft-Paufler, Cornelius

(57) **Zusammenfassung**

Es wird somit ein sanitäres Einbauteil (1), welches beispielsweise als ein Ventil (2) und/oder ein Umstellventil (3) ausgeführt sein kann, und bei dem wenigstens ein Dichtring (9, 18, 19, 20), der beispielsweise als O-Ring ausgeführt sein kann, an einer Auflagefläche (10, 22) an einem Gehäuseteil (11, 21) des sanitären Einbauteils (1) aufliegt, und wobei die Auflagefläche (10, 22) wenigstens eine vorzugsweise umlaufende Rippe (12, 13, 14, 27, 28, 29, 30, 31, 32, 33, 34) aufweist. Außerdem wird eine Dichtverbindung (200) zwischen zwei stationären Teilen (11, 21, 100) vorgeschlagen, wobei wenigstens eines der Teile (11, 21, 100) ein Gehäuseteil (11, 21) eines sanitären Einbauteils (1) sein kann, wobei das sanitäre Einbauteil (1) ein erfindungsgemäßes sanitäres Einbauteil (1) sein kann, wobei zwischen die zwei Teile (11, 21, 100) ein Dichtring (9, 18, 19, 20) eingelegt ist, und wobei jedes der zwei Teile (11, 21, 100) eine Pressfläche (201, 202) für den Dichtring (9, 18, 19, 20) ausbildet, und wobei wenigstens eine der Pressflächen (201, 202) wenigstens eine vorzugsweise umlaufende Rippe (12, 13, 14, 27, 28, 29 30, 31, 32, 33, 34) aufweist. Ferner wird eine Sanitärarmatur (100) vorgeschlagen, welche ein erfindungsgemäßes sanitäres Einbauteil (1) und/oder eine erfindungsgemäße Dichtverbindung (200) aufweist.

## Beschreibung

Die Erfindung betrifft ein sanitäres Einbauteil mit wenigstens einem Dichtring, der an einer Auflagefläche an einem Gehäuseteil des sanitären Einbauteils aufliegt.

Die Erfindung betrifft weiter eine Dichtverbindung zwischen zwei stationären Teilen.

Die Erfindung betrifft weiter eine Sanitärarmatur.

Derartige Einbauteile sind bekannt. Hierbei kann es sich beispielsweise um ein Ventil, beispielsweise ein Umstellventil, um einen Strahlregler oder andere Einbauteile handeln.

Bei derartigen Einbauteilen ist es häufig notwendig, einen ein Fluid führenden Raum gegen einen anderen Raum abzudichten. Hierzu werden beispielsweise Dichtringe verwendet. Diese Dichtringe werden in der Regel zwischen zwei separaten Teilen, welche jeweils Teil des Einbauteils sein können, verpresst, um eine Dichtheit zu erzeugen. Wenigstens eines dieser Teile ist hierbei ein Gehäuseteil des sanitären Einbauteils, welches zumindest einen Abschnitt des sanitären Einbauteils nach außen hin begrenzt. Hierbei kann auch wenigstens eines der Teile, zwischen denen der Dichtring verpresst wird, beweglich sein. Es besteht jedoch die Gefahr, insbesondere bei beengten Platzverhältnissen, beispielsweise, wenn der Dichtring in eine Nut eingesetzt wird, dass sich Spaltextrusionen des Dichtrings bilden können. Der Dichtring kann hierbei derart verpresst sein, dass sein Material aus einem begrenzten Aufnahmebereich für den Dichtring herausquillt.

Aufgabe der Erfindung ist es, derartige Spaltextrusionen zu vermeiden.

Zur Lösung der genannten Aufgabe sind erfindungsgemäß die Merkmale des Anspruchs 1 vorgesehen. Insbesondere wird somit zur Lösung der genannten Aufgabe bei sanitären Einbauteilen der eingangs beschriebenen Art erfindungsgemäß vorgeschlagen, dass die Auflagefläche wenigstens eine Rippe aufweist. Der Dichtring kann beispielsweise ein O-Ring sein. Die Rippe ist vorzugsweise umlaufend ausgebildet. Der Verlauf einer umlaufenden Rippe kann hierbei einen Kreisumfang um die Längsmittelachse des sanitären Einbauteils beschreiben. Die Rippe kann jedoch auch unterbrochen sein.

Somit ist an einer Auflagefläche des Dichtrings an einem Gehäuseteil eine strukturierte oder profilierte Oberfläche vorgesehen. Die strukturierte Oberfläche bildet Ausweichbereiche, welche bei einer Verpressung des Dichtrings Material des Dichtrings aufnehmen können, sodass die Bildung von Spaltextrusionen verhindert werden kann. Die Ausweichbereiche können beispielsweise durch eine und/oder mehrere Rippen und/oder weitere Teile des sanitären Einbauteils begrenzt sein. Sind mehrere Rippen vorgesehen, kann eine günstige Lastverteilung erreicht und die Belastung der einzelnen Rippen reduziert werden.

Die Ausweichbereiche stellen einen fakultativ gefüllten Aufnahmeraum für Material des Dichtrings dar, wobei der tatsächliche Füllzustand der Ausweichbereiche keinen oder einen vernachlässigbaren Einfluss auf die Dichtwirkung hat. Die Ausweichbereiche werden somit bei einer Verpressung eines Dichtrings variabel aufgeführt, beispielsweise in Abhängigkeit von der Größe des Dichtrings und/oder des Anpressdrucks.

Bei einer vorteilhaften Ausgestaltung kann vorgesehen sein, dass die Rippe innerhalb einer Projektion des Dichtrings auf die Auflagefläche ausgebildet ist.

Somit kann sichergestellt werden, dass der Dichtring die Rippe kontaktiert. Die Rippe kann somit Einfluss auf den Dichtring nehmen, beispielsweise während einer Verpressung. So können der oder die gebildeten Aufnahmeräume ihre Funktion erfüllen. Beispielsweise kann sich ein von der Rippe eingenommener Radialbereich des Einbauteils innerhalb eines von dem Dichtring eingenommenen Radialbereichs des Einbauteils befinden. Ein Radialbereich des Einbauteils kann insbesondere als ein Hohlzylinder beschrieben werden, der um die Längsmittelachse des Einbauteils zentriert ist, also parallel zu der Längsmittelachse des Einbauteils verläuft.

Bei einer vorteilhaften Ausgestaltung kann vorgesehen sein, dass eine Gegenfläche für den Dichtring an einem weiteren Gehäuseteil vorgesehen ist.

Die Gegenfläche ist dazu vorgesehen, den Dichtring zu kontaktieren, so dass der Dichtring zwischen Auflagefläche und Gegenfläche verpresst werden kann. Dies ist vorzugsweise in Montagestellung des sanitären Einbauteils der Fall. Somit kann der Dichtring zu einer Abdichtung zwischen zwei verschiedenen Gehäuseteilen des sanitären Einbauteils vorgesehen sein.

Bei einer vorteilhaften Ausgestaltung kann vorgesehen sein, dass der Dichtring vollständig durch Gehäuseteile eingeschlossen ist.

Somit kann der Dichtring gegen äußere Einflüsse geschützt werden und die Haltbarkeit der Abdichtung verbessert werden.

Bei einer vorteilhaften Ausgestaltung kann vorgesehen sein, dass die Auflagefläche ein Nutgrund einer Nut ist.

Der Dichtring kann somit in eine Nut eingesetzt sein. Die Nut kann die Anordnung des Dichtrings an dem sanitären Einbauteil festlegen und ihn in dieser Anordnung stabilisieren.

Bei einer vorteilhaften Ausgestaltung kann vorgesehen sein, dass an der Auflagefläche mehrere Rippen ausgebildet sind. Alternativ oder zusätzlich kann vorgesehen sein, dass an der Gegenfläche mehrere Rippen ausgebildet sind. Die Rippen können umlaufend ausgebildet und/oder unterbrochen sein.

Somit können die Auflagefläche und/oder die Gegenfläche vorteilhaft strukturiert bzw. profiliert sein. Die Anordnung und Abmessungen der Rippen kann hierbei auf den Dichtring abgestimmt sein. Die Art und Weise der Deformation des Dichtrings während seiner Verpressung zwischen Auflagefläche und Gegenfläche kann somit genauer definiert sein.

Bei einer vorteilhaften Ausgestaltung kann vorgesehen sein, dass der Dichtring ein erster Dichtring ist, der gegen eine Gegenfläche eines weiteren Gehäuseteils gepresst ist, und dass ein zweiter Dichtring vorgesehen ist, der an einer Auflagefläche mit wenigstens einer Rippe aufliegt und zur Abdichtung nach außen ausgebildet ist. Die Rippe ist vorzugsweise umlaufend ausgeführt.

Somit können die beschriebenen Vorteile profilierter Auflageflächen und/oder Gegenflächen bei einem sanitären Einbauteil sowohl zu einer Abdichtung zwischen zwei Gehäuseteilen als auch zu einer Abdichtung nach außen genutzt werden. Beispielsweise kann der erste Dichtring vollständig durch Gehäuseteile eingeschlossen sein. Hierbei kann entweder die Auflagefläche oder der Gegenfläche mittels einer oder mehrerer Rippen profiliert sein. Es können auch sowohl die Auflagefläche als auch die Gegenfläche wie beschrieben profiliert sein.

Bei einer vorteilhaften Ausgestaltung kann vorgesehen sein, dass der Dichtring in Axialrichtung des Einbauteils verpresst ist. Alternativ oder zusätzlich kann vorgesehen sein, dass der Dichtring quer zu der Gegenfläche verpresst ist. Alternativ oder zusätzlich kann vorgesehen sein, dass der Dichtring in Durchströmrichtung eines Fluids verpresst ist.

Die drei erwähnten Richtungen der Verpressung beziehen sich insbesondere auf die Richtung der von der Auflagefläche und/oder der Gegenfläche auf den Dichtring übertragenen Kraft, die zu der Verpressung des Dichtrings führt. Die drei erwähnten Richtungen können beispielsweise parallel zueinander angeordnet sein. Somit kann je nach Anforderungen eine unterschiedliche Positionierung und Verpressung des Dichtrings erfolgen.

Bei einer vorteilhaften Ausgestaltung kann vorgesehen sein, dass eine, insbesondere die bereits erwähnte, Rippe an der Auflagefläche zentriert ist. Alternativ oder zusätzlich kann vorgesehen sein, dass eine, insbesondere die bereits erwähnte, Rippe an der Gegenfläche zentriert ist. Alternativ oder zusätzlich kann vorgesehen sein, dass mehrere Rippen über die Auflagefläche verteilt sind. Alternativ oder zusätzlich kann vorgesehen sein, dass mehrere Rippen über die Gegenfläche verteilt sind. Einige oder alle dieser jeweiligen Rippen können umlaufend ausgeführt sein.

Somit kann je nach Dichtring oder je nach bestehenden Anforderungen an die Abdichtung eine unterschiedliche Anordnung der Rippe bzw. Rippen gewählt werden. Beispielsweise kann die Anordnung der Rippen an die Form des gewählten Dichtrings angepasst sein oder so gewählt werden, dass verschiedenartige Dichtringe mit dem sanitären Einbauteil verwendet werden können.

Bei einer vorteilhaften Ausgestaltung kann vorgesehen sein, dass mehrere Rippen voneinander abweichende Höhen aufweisen. Bevorzugt handelt es sich hierbei um umlaufende Rippen. Zusätzlich kann vorgesehen sein, dass es sich bei diesen Rippen um Rippen der Auflagefläche und/oder der Gegenfläche handelt.

Somit kann die Geometrie im Bereich des Dichtrings und der Rippen noch weiter variiert werden. Die Anordnung der Rippen und ihre Höhen können somit noch besser auf den Dichtring abgestimmt werden.

Bei einer vorteilhaften Ausgestaltung kann vorgesehen sein, dass wenigstens drei Rippen an der Auflagefläche vorgesehen sind. Alternativ oder zusätzlich kann vorgesehen sein, dass wenigstens drei Rippen an der Gegenfläche vorgesehen sind. Zusätzlich kann vorgesehen sein, dass hierbei eine mittlere Rippe eine geringere Höhe als eine oder die äußeren Rippen aufweist.

Bei den äußeren Rippen kann es sich hierbei um die um eine mittlere Rippen verteilten weiteren Rippen handeln. Insbesondere bei einer geraden Anzahl von Rippen kann hierbei anstelle auf eine einzelne mittlere Rippe auf zwei mittlere Rippen Bezug genommen werden.

So wird die Vielfalt möglicher Anordnungen von Rippen weiter vergrößert und es ist somit möglich, Wechselwirkungen des Dichtrings mit der Auflagefläche und/oder der Gegenfläche genauer zu bestimmen.

Bei einer vorteilhaften Ausgestaltung kann vorgesehen sein, dass die Höhe einer Rippe der Auflagefläche der Halbwertsbreite der jeweiligen Rippe entspricht. Alternativ oder zusätzlich kann vorgesehen sein, dass die Höhe einer Rippe der Gegenfläche der Halbwertsbreite der jeweiligen Rippe entspricht. Hierbei können auch mehrere Rippen, insbesondere jede, der an der jeweiligen Fläche vorgesehenen Rippen betrachtet werden. Alternativ oder zusätzlich kann vorgesehen sein, dass die Höhe einer jeweiligen Rippe um weniger als 50 % von ihrer Halbwertsbreite abweicht. Bevorzugt beträgt diese Abweichung weniger als 25 % und besonders bevorzugt weniger als 10 %.

Unter der Halbwertsbreite kann hierbei insbesondere die Breite einer Rippe bzw. Ihrer Querschnittsfläche bei einem Schnitt quer zu Ihrer Längserstreckung und auf halber Höhe der Rippe verstanden werden. Bei einer bogenförmig verlaufenden und/oder umlaufenden Rippe kann der betrachtete Schritt beispielsweise orthogonal zu der Längserstreckung der Rippe im jeweiligen Schnittpunkt bzw. an der Schnittlinie ausgerichtet sein. Die Querschnittsfläche einer Rippe ist insbesondere die in einem Schnitt sichtbare Fläche der Rippe, wobei die Schnittebene die Längsmittelachse des Einbauteils enthält. Die Höhe der Rippe kann insbesondere von der Auflagefläche und/oder der Gegenfläche, die mit der jeweiligen Rippe versehen sind, ausgehend bestimmt sein.

Somit lassen sich verschiedene geometrische Parameter frei wählen, um die Profilierung der Auflagefläche bzw. Gegenfläche vorteilhaft zu gestalten. In Abhängigkeit von den Anforderungen je nach realisiertem sanitären Einbauteil und in Abhängigkeit von beispielsweise Geometrie oder Materialwahl des jeweiligen Dichtrings können somit vielfältige Auflageflächen und Gegenfläche realisiert und die voranstehenden Parameter aufeinander abgestimmt werden.

Bei einer vorteilhaften Ausgestaltung kann vorgesehen sein, dass eine Höhenverteilung mehrerer Rippen der Auflagefläche symmetrisch ist. Alternativ oder zusätzlich kann vorgesehen sein, dass eine Höhenverteilung mehrerer umlaufende Rippen der Gegenfläche symmetrisch ist. Diese Symmetrie kann vorzugsweise in Relation zu der Mitte der Auflagefläche und/oder der Gegenfläche gegeben sein.

Bei einer vorteilhaften Ausgestaltung kann vorgesehen sein, dass die Höhen mehrerer Rippen von der Mitte der Auflagefläche und/oder der Gegenfläche zu einer Außenseite der Auflagefläche und/oder der Gegenfläche hin zunehmen.

Unter der Mitte der Auflagefläche und der Mitte der Gegenfläche kann hierbei insbesondere der Mittelpunkt eines Schnitts durch die jeweilige Fläche, insbesondere wobei die Schnittebene die Längsmittelachse des sanitären Einbauteils enthält, verstanden werden. Somit können die Höhen mehrerer, beispielsweise umlaufender, Rippen in Abhängigkeit von ihrer Entfernung von der Mitte der Auflagefläche und/oder der Gegenfläche hin genauer definiert sein. Die Höhenverteilung mehrerer Rippen der Auflagefläche und/oder der Gegenfläche kann somit an die Geometrie des Dichtrings angepasst sein. So ist beispielsweise eine ansteigende Höhe der Rippen nach außen hin besonders bei der Verwendung eines O-Rings als Dichtring vorteilhaft. Hierdurch kann die Dichtwirkung weiter verbessert werden.

Bei einer vorteilhaften Ausgestaltung kann vorgesehen sein, dass das Einbauteil mittels eines Spritzgussverfahrens gefertigt ist.

Somit kann eine erfindungsgemäßes sanitäres Einbauteil kostengünstig hergestellt sein.

Bei einer vorteilhaften Ausgestaltung kann vorgesehen sein, dass das Einbauteil als Umstellventil ausgebildet ist. Somit können die aufgeführten Vorteile erfindungsgemäßer sanitärer Einbauteile bei Umstellventilen realisiert werden.

Bei einer vorteilhaften Ausgestaltung kann vorgesehen sein, dass ein Einlass und/oder Auslass des Einbauteils radial zu der Längsmittelachse des Einbauteils ausgerichtet ist.

Bei dem Einlass und/oder dem Auslass kann es sich hierbei insbesondere um die zwischen einem jeweiligen Oberteil und einem jeweiligen Unterteil befindliche Lücke handeln.

Alternativ oder zusätzlich hierzu kann vorgesehen sein, dass ein Einlass und/oder Auslass des Einbauteils in Richtung der Längsmittelachse des Einbauteils ausgerichtet ist.

So kann beispielsweise ein weiterer Einlass und/oder Auslass an dem sanitären Einbauteils vorgesehen sein, der beispielsweise in Axialrichtung des Einbauteils gerichtet ist.

Unter der Ausrichtung eines Einlasses und/oder eines Auslasses kann insbesondere die Strömungsrichtung des Fluids bei seinem Durchtritt durch den Öffnungsquerschnitt einer Durchlassöffnung verstanden werden.

Alternativ oder zusätzlich sind zur Lösung der genannten Aufgabe erfindungsgemäß die Merkmale des nebengeordneten, auf eine Dichtverbindung zwischen zwei stationären Teilen, insbesondere wobei wenigstens eines der Teile ein Gehäuseteil eines sanitären Einbauteils ist, wobei zwischen die zwei Teile ein Dichtring eingelegt ist, und jedes der zwei Teile eine Pressfläche für den Dichtring ausbildet, gerichteten Anspruchs vorgesehen. Bevorzugt kann es sich bei dem sanitären Einbauteil um ein sanitäres Einbauteil wie bereits beschrieben handelt. Insbesondere wird somit zur Lösung der genannten Aufgabe bei Dichtverbindungen der eingangs beschriebenen Art erfindungsgemäß vorgeschlagen, dass wenigstens eine der Pressflächen wenigstens eine vorzugsweise umlaufende Rippe aufweist.

Bei einer Pressfläche kann es sich hierbei beispielsweise um eine Auflagefläche und/oder eine Gegenfläche wie bereits beschrieben handeln. Somit können die bereits beschriebenen Vorteile bei Dichtverbindungen mit einer mit wenigstens einer Rippe versehenen Pressfläche genutzt werden.

Alternativ oder zusätzlich sind zur Lösung der genannten Aufgabe erfindungsgemäß die Merkmale des nebengeordneten, auf eine Sanitärarmatur gerichteten Anspruchs vorgesehen. Insbesondere wird somit zur Lösung der genannten Aufgabe bei Sanitärarmaturen der eingangs beschriebenen Art erfindungsgemäß vorgeschlagen, dass die Sanitärarmatur ein sanitäres Einbauteil wie zuvor beschrieben aufweist. Alternativ oder zusätzlich kann vorgesehen sein, dass die Sanitärmatur eine Dichtverbindung wie zuvor beschrieben aufweist.

Somit können die zuvor beschriebenen Vorteile erfindungsgemäßer sanitäre Einbauteile und/oder erfindungsgemäßer Dichtverbindungen bei Sanitärarmaturen genutzt werden.

Der Dichtring kann beispielsweise zwischen einer profilierten, also mit wenigstens einer Rippe versehenen, Fläche des Einbauteils und einer unprofilierten Fläche an einer Sanitärarmatur verpresst sein. Das Vorsehen einer unprofilierten Gegenfläche an der Sanitärarmatur kann den Bearbeitungsaufwand in der Armaturenherstellung gegenüber dem Fertigen einer profilierten Gegenfläche an der Sanitärarmatur verringern. Es ist auch möglich, dass eine Gegenfläche an einer Sanitärarmatur in gleicher Art und Weise wie die Auflagefläche an dem sanitären Einbauteil profiliert ist.

Die Erfindung wird nun anhand von Ausführungsbeispielen im Rahmen einer Zusammenschau der Figuren näher beschrieben, ist jedoch nicht auf die Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele. Funktionell und/oder konstruktiv gleichartige oder identische Bauteile und Funktionseinheiten sind stellenweise mit denselben Bezugszeichen bezeichnet und nicht wiederholt beschrieben.

Es zeigen:
- Figur 1: ein erfindungsgemäßes sanitäres Einbauteil in einer perspektivischen, teilweisen Schnittansicht mit zwei vergrößert dargestellten Abschnitten des sanitären Einbauteils,
- Figur 2: das sanitäre Einbauteile aus Figur 1 in einer weiteren perspektivischen Darstellung,
- Figur 3: das sanitäre Einbauteile aus den Figuren 1 und 2 in einer seitlichen Ansicht,
- Figur 4: das sanitäre Einbauteil aus den Figuren 1 bis 3 in einer weiteren seitlichen Ansicht,
- Figur 5: das sanitäre Einbauteil aus den Figuren 1 bis 4 in einer weiteren seitlichen Ansicht,
- Figur 6: eine teilweise geschnittene, perspektivische Ansicht des sanitären Einbauteils aus den Figuren 1 bis 5, welches in eine erfindungsgemäße Sanitärmatur eingesetzt ist, und
- Figur 7: eine Schnittansicht einer Kontaktstelle zwischen dem sanitären Einbauteil und der Sanitärmatur aus Figur 6.

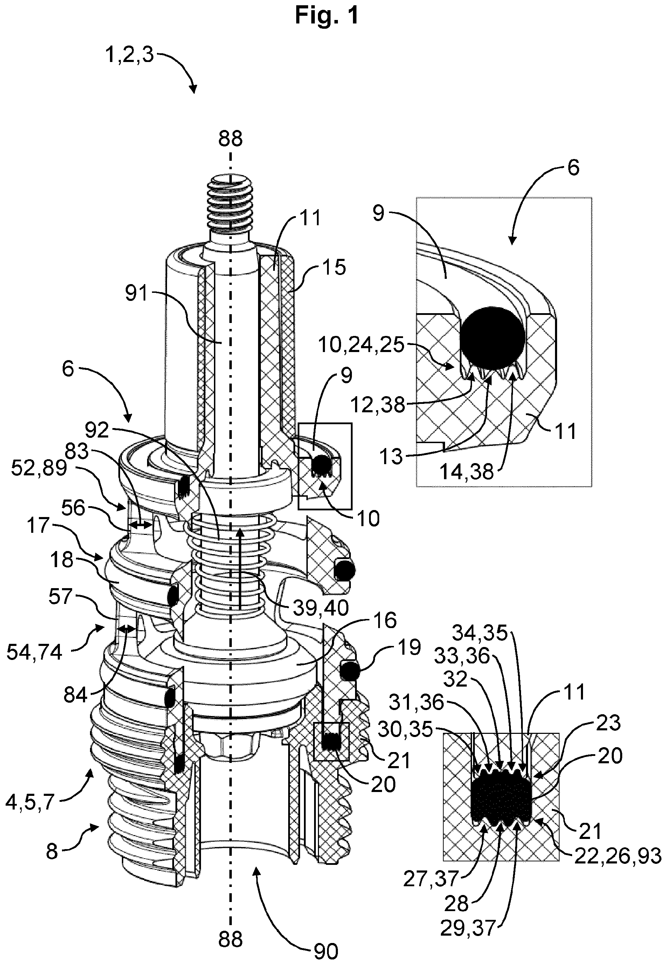

Figur 1 zeigt ein erfindungsgemäßes sanitäres Einbauteil 1, welches als Ventil 2 ausgeführt ist. Genauer definiert ist das Einbauteil 1 als Umstellventil 3 ausgebildet. Das gezeigte Einbauteil 1 ist in diesem Ausführungsbeispiel mittels eines Spritzgussverfahrens gefertigt.

Das Einbauteil 1 verfügt über ein Gehäuse 4 und eine an dem Gehäuse 4 ausgebildete Anlagefläche 5, über die eine mechanische Spannung in das Gehäuse 4 einbringbar ist. Eine weitere Anlagefläche 6 liegt der Anlagefläche 5 gegenüber. Die Anlagefläche 5 wird hierbei durch ein Gewinde 7 gebildet. Benachbart zu dem Gewinde 7 befindet sich ein weiteres Gewinde 8. So lässt sich das Einbauteil 1 mittels des Gewindes 7 in eine Sanitärarmatur 100 einschrauben, wobei ein weiteres, nicht gezeigtes, Sanitärbauteil über das Gewinde 8 anschließbar ist. Die Anlagefläche 6 wird teilweise durch einen als O-Ring ausgeführten Dichtring 9 gebildet, der an einer Auflagefläche 10 an einem Gehäuseteil 11 des sanitären Einbauteils 1 aufliegt.

Die Auflagefläche 10 weist wenigstens eine, nämlich drei Rippen 12, 13, 14 auf. Die Rippen 12, 13, 14 sind hierbei umlaufend ausgeführt. Das Gehäuseteil 11 wird teilweise von einer Hülse 15 umgeben. Jede der Rippen 12, 13, 14 ist innerhalb einer Projektion des Dichtrings 9 auf die Auflagefläche 10 ausgebildet.

Innerhalb des Gehäuseteils 11 des sanitären Einbauteils 1 ist eine Handhabe 91 mit einem Ventilkörper 16 beweglich gelagert.

Während der Dichtring 9 für eine in Bezug auf die Längsmittelachse 88 des Einbauteils 1 axial wirkende Abdichtung ausgebildet ist, ist ein weiterer, an einem Mittelteil 17 ausgebildeter Dichtring 18 für eine radial gerichtete Dichtwirkung ausgeführt. In ähnlicher Weise ist der Dichtring 19 für eine radial gerichtete Abdichtung ausgeführt, wohingegen ein weiterer Dichtring 20 für eine axial wirkende Abdichtung zwischen zwei Gehäuseteilen 11, 21 ausgeführt ist. Bei den Dichtringen 9, 18, 19, 20 handelt es sich jeweils um O-Ringe. Die radial wirkenden Dichtringe 18, 19 können bei einem nicht gezeigten Ausführungsbeispiel ebenfalls auf jeweils mit wenigstens einer Rippe versehenen Auflageflächen aufliegen. Der Dichtring 20 liegt an einer Auflagefläche 22 an dem Gehäuseteil 21 auf und wird gegen eine für den Dichtring 20 an dem Gehäuseteil 11 vorgesehene Gegenfläche 23 gepresst. Der Dichtring 20 ist vollständig durch die Gehäuseteile 11, 21 eingeschlossen.

Die Auflageflächen 10, 22 der Dichtringe 9, 20 sind jeweils Nutgründe 24, 93 einer jeweiligen Nut 25, 26. Dies gilt in analoger Weise auch für weitere Dichtringe 18, 19. Im Bereich um den Dichtring 20, der ausschnittsweise vergrößert dargestellt ist, ist erkennbar, dass sowohl an der Auflagefläche 22 als auch an der Gegenfläche 23 jeweilige Rippen 27, 28, 29, nämlich an der Auflagefläche 22, sowie Rippen 30, 31, 32, 33, 34, nämlich an der Auflagefläche 23, ausgebildet sind. Die Rippen 30 und 34 sowie die Rippen 31 und 33, und die Rippen 27, 29 sind hierbei jeweils mit gleichgroßen Querschnittsflächen 35, 36, 37 ausgeführt. Alle Rippen 12, 13, 14, 27, 28, 29, 30, 31, 32, 33, 34 sind im Ausführungsbeispiel umlaufend ausgeführt.

Der Dichtring 20 ist hierbei ein erster Dichtring an der Auflagefläche 22 des Gehäuseteils 21, der gegen eine Gegenfläche 23 eines weiteren Gehäuseteils 11 gepresst ist, wobei der Dichtring 9 als ein zweiter Dichtring vorgesehen ist, der an einer Auflagefläche 10 mit Rippen 12, 13, 14 aufliegt und zur Abdichtung nach außen ausgebildet ist. Auch die Rippen 12 und 14 weisen hierbei übereinstimmende Querschnittsflächen 38 auf.

Die Dichtringe 9, 20 sind jeweils in Axialrichtung 39 des Einbauteils 1 und jeweils quer zu ihrer jeweiligen Gegenfläche 10, 22 und außerdem in Durchströmrichtung 40 eines Fluids verpresst.

Bei Betrachtung der Bereiche um die Dichtringe 9, 20, welche jeweils vergrößert dargestellt sind, ist erkennbar, dass die Rippe 13 an der Auflagefläche 10, die Rippe 28 an der Auflagefläche 22 und die Rippe 32 an der Gegenfläche 23 zentriert sind. Die Rippen 12, 13, 14 sind über die Auflagefläche 10, die Rippen 27, 28, 29 über die Auflagefläche 22 und die Rippen 30, 31, 32, 33, 34 über die Gegenfläche 23 verteilt.

In den Vergrößerungen der Bereiche um die Dichtringe 9, 20 ist zu erkennen, dass die Rippen 12, 13, 14 der Auflagefläche 10, sowie die Rippen 27, 28, 29 der Auflagefläche 22 sowie die Rippen 30, 31, 32, 33, 34 der Gegenfläche 23 jeweils voneinander abweichende Höhen aufweisen. Diese Höhen sind jeweils von der Auflagefläche 10, 22 bzw. der Gegenfläche 23 ausgehend bestimmt oder gemessen. An der Auflagefläche 10, 22 sind jeweils wenigstens drei Rippen 12, 13, 14 bzw. 27, 28, 29 vorgesehen, wobei jeweils die mittlere Rippe 13, 28 eine geringere Höhe als die äußeren Rippen 12, 14 bzw. 27, 29 aufweist. Dies ist bei der Gegenfläche 23 der Fall, bei der die mittlere Rippe 32 eine geringere Höhe als die nächstliegenden, äußeren Rippen 31, 33 aufweist. Die Rippen 31, 33 weisen auch jeweils eine geringere Höhe als die nächstliegenden äußeren Rippen 30, 34 auf. An der Gegenfläche 20 ist ferner zu erkennen, dass Rippen 30, 34 die Gegenfläche seitlich begrenzen.

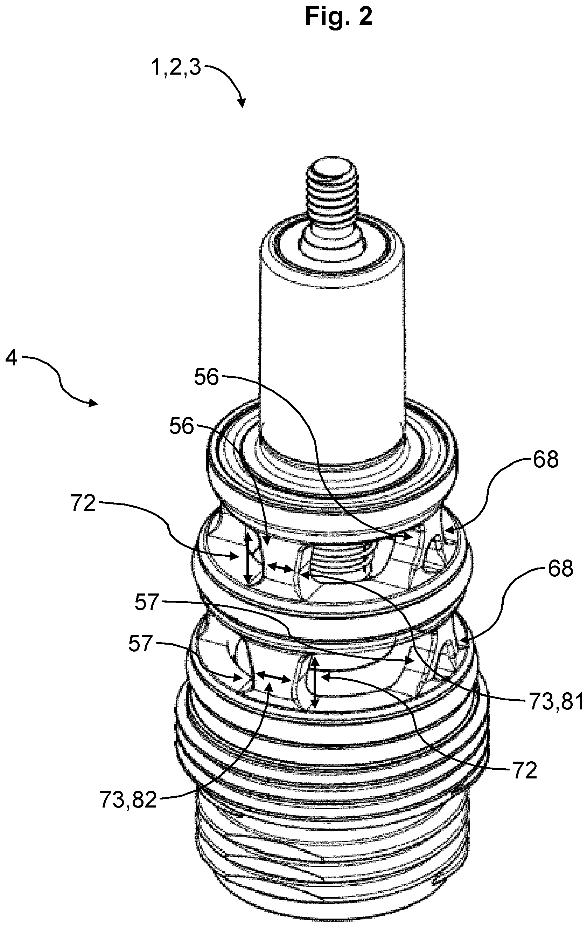

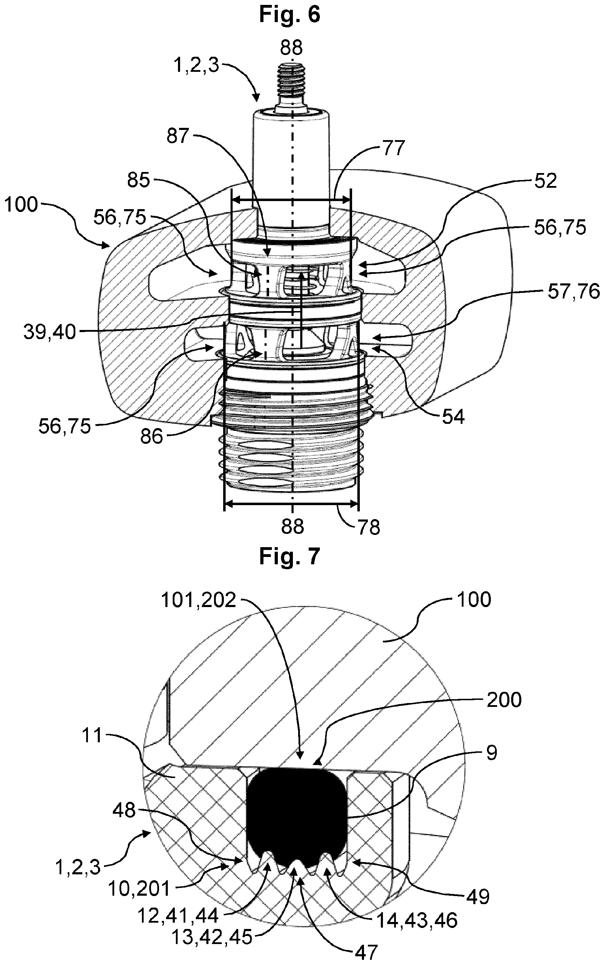

Eine genauere Betrachtung der Verhältnisse im Bereich des Dichtrings 9, der auf den Rippen 12, 13, 14 der Auflagefläche 10 aufliegt, ist anhand der Figur 7 möglich. Figur 7 zeigt eine ausschnittsweise Schnittdarstellung der in Figur 6 dargestellten Situation, in der das sanitäre Einbauteil 1 der Figuren 1 bis 5 in eine Sanitärarmatur 100 eingesetzt ist. Die dort gezeigten Merkmale der Rippen können in analoger Weise durch die Rippen der Auflagefläche 22 bzw. der Gegenfläche 23 erfüllt sein.

Der Dichtring 9 kontaktiert hierbei eine unprofilierte Gegenfläche 101 der Sanitärmatur 100 und bildet eine erfindungsgemäße Dichtverbindung 200 aus. Die Dichtverbindung 200 wird zwischen zwei stationären Teilen 11, 100 gebildet, wobei eines dieser Teile das Gehäuseteil 11 des sanitären Einbauteils 1 ist.

Zwischen diesen Teilen 11, 100 ist ein Dichtring 9 eingelegt und jedes der zwei Teile 11, 100 bildet eine jeweilige Pressfläche 201, 202 aus, wobei die Pressfläche 201 die Auflagefläche 10 des sanitären Einbauteils 1 ist und die Pressfläche 202 die Gegenfläche 101 der Sanitärmatur 100 ist. Wenigstens eine dieser Pressfläche 201, 202, nämlich die an dem sanitären Einbauteil 1 vorgesehene Pressfläche 201, nämlich die Auflagefläche 10, weist hierbei wenigstens eine, nämlich drei Rippen 12, 13, 14 auf, welche umlaufend ausgeführt sind.

Die Rippe 13 ist an der Auflagefläche 10 zentriert. Mehrere, nämlich drei Rippen 12, 13, 14 sind über die Auflagefläche 10 verteilt. Die Höhe 42 der Rippe 13 der Auflagefläche 10 entspricht hierbei der Halbwertsbreite 45 der Rippe 13. Die Halbwertsbreite 44, 45, 46 ist hierbei die Breite der jeweiligen Rippen 12, 13, 14 auf halber Höhe 41, 42, 43 der jeweiligen Rippe 12, 13, 14.

Die Höhen 41, 43 der Rippen 12, 14 weichen jeweils um weniger als 50 % von den Halbwertsbreiten 44, 46 der Rippen 12, 14 ab. Bei einer hier nicht gezeigten Ausführungsform weichen die Höhen der jeweiligen Rippen um weniger als 25 % und/oder weniger als 10 % von den jeweiligen Halbwertsbreiten der jeweiligen Rippen ab.

Ferner ist eine Höhenverteilung der Rippen 12, 13, 14 der Auflagefläche 10 symmetrisch zu der durch die Rippe 13 markierten Mitte 47 der Auflagefläche 10. Die Höhen 41, 42, 43 der Rippen 12, 13, 14 nehmen von der Mitte 47 der Auflagefläche 10 zu einer, genau zu beiden Außenseiten 48, 49 zu.

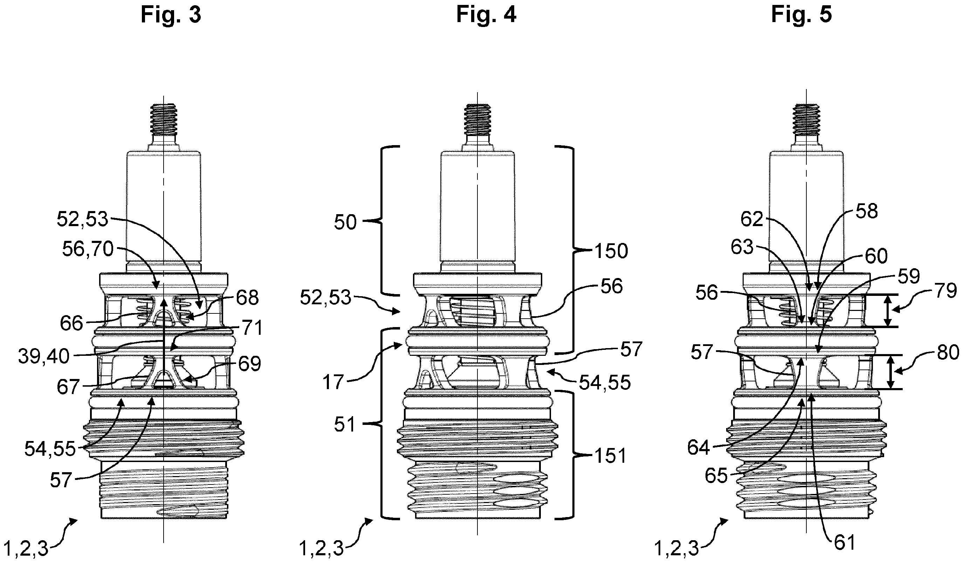

Das Gehäuse 4 verfügt über einen Oberteil 50 und einen Unterteil 51 (vgl. etwa Figur 4). Oberteil 50 und Unterteil 51 sind jeweils Abschnitte des Gehäuses 4, deren Begrenzung innerhalb des Gehäuses 4 frei gewählt werden kann. Bei einem erfindungsgemäßen sanitären Einbauteils 1 sind die Begrenzungen des Oberteils 50 und des Unterteils 51 so festgelegt, dass zwischen dem Oberteil 50 und dem Unterteil 51 eine Lücke 52 vorgesehen ist und dass in der Lücke 52 wenigstens eine Durchströmöffnung 53 ausgebildet ist. Das sanitäre Einbauteil 1 weist neben der Lücke 52 eine weitere Lücke 54 auf, welche ebenfalls wenigstens eine Durchströmöffnung 55 aufweist. Das Mittelteil 17, welches Teil des Gehäuses 4 ist, trennt mehrere, nämlich zwei Lücken 52, 54, welche übereinander angeordnet sind. Je nachdem, welche der Lücken 52, 54 betrachtet wird, ist das Mittelteil 17 Teil des Oberteils 150 oder Teil des Unterteils 51. Es können somit an die jeweiligen Lücken 52, 54 angrenzend verschiedene Oberteile 50, 150 und Unterteile 51, 151 definiert werden. Die Lücken 52, 54 sind jeweils von wenigstens einer Stützstrebe 56, 57 überbrückt und weisen durch die jeweiligen Stützstreben 56, 57 gebildete Durchströmöffnungen 53, 55 auf. Die Durchströmöffnungen 53, 55 können jeweils verschiedene und voneinander abweichende Formen aufweisen, wirken jedoch jeweils in ähnlicher Weise.

Im Ausführungsbeispiel ist die Lücke 54 als Einlass 74 vorgesehen, während die Lücke 52 als Auslass 89 vorgesehen ist. Ein weiterer Auslass 90 ist stirnseitig an dem Einbauteil 1 vorgesehen. Der durch eine jeweilige Lücke 52, 54 gebildete Einlass 74 bzw. Auslass 89 ist radial zu der Längsmittelachse 88 des Einbauteils 1 ausgerichtet. Der stirnseitige Auslass 90 ist parallel zu der Längsmittelachse 88 des Einbauteils 1 ausgerichtet.

Mittels der Handhabe 91 ist der Ventilkörper 16 gegen eine Rückstellkraft eines Rückstellelements 92 aus der in Figur 1 gezeigten Ventilstellung, in der eine fluidische Verbindung zwischen dem Einlass 74 und dem Auslass 89 besteht, in eine Ventilstellung bringbar, in der eine fluidische Verbindung zwischen dem Einlass 74 und dem stirnseitigen Auslass 89 besteht. Das Rückstellelement kann hierbei als Rückstellfeder ausgeführt sein.

Die Durchströmöffnungen 53 der Lücke 52 werden durch die Anordnung der Stützstreben 56 und die Durchströmöffnungen 55 der Lücken 54 durch die Anordnung der Stützstreben 57 gebildet (vgl. etwa die Figuren 3 bis 5). Die Erfindung sieht wenigstens zwei verschiedene Arten von Stützstreben 56, 57 vor. Jede Lücke 52, 54 kann somit von einer oder mehreren Stützstreben 56, 57 überbrückt sein, wobei die Stützstreben 56, 57 in unterschiedlicher Weise, wie im Folgenden noch erläutert, ausgeführt sein können.

Die Stützstreben 56, 57 weisen jeweils wenigstens einen oberen Befestigungsbereich 58, 59 an einem jeweiligen Oberteil 50, 150 und jeweils wenigstens einen unteren Befestigungsbereich 60, 61 an einem jeweiligen Unterteil 51, 151 auf.

Die jeweiligen Befestigungsbereiche 58, 59, 60, 61 der Stützstreben 56, 57 einer jeweiligen Lücke 52, 54 überdecken voneinander abweichende Umfangsabschnitte 62, 63, 64, 65.

Eine seitliche Begrenzung 66, 67 der Stützstrebe 56, 57 ist gegenüber einer Axialrichtung 39 des Einbauteils 1 und gegenüber einer Durchströmrichtung 40 eines Fluids schräggestellt.

Eine mögliche Ausführungsform der Stützstrebe 56, 57 ist besonders in Figur 3 erkennbar und dadurch gebildet, dass jeweils wenigstens eine weitere Stützstrebe 68, 69 ausgebildet ist, und zusammen jeweils zwei gegeneinandergestellte Stützstreben 56, 57, 68, 69 ausgebildet sind. Jeweils zwei gegeneinandergestellte Stützstreben 56, 57, 68, 69 können sich vereinigen, wie dies im Ausführungsbeispiel in einem jeweils oberen Axialbereich des Einbauteils 1 der Fall ist, wo die jeweils zwei gegeneinandergestellten Stützstreben 56, 57, 68, 69 einen gemeinsamen Befestigungsbereich 70, 71 aufweisen.

Eine andere Ausführungsform der Stützstreben 56, 57 ist besonders in Figur 5 erkennbar und dadurch gebildet, dass jeweils eine einzelne Stützstrebe 56, 57 vorgesehen ist. Bei diesen Stützstreben 56, 57 liegt der von dem jeweils unteren Befestigungsbereich 60, 61 überdeckte Umfangsabschnitt 63, 65 innerhalb des von dem jeweils oberen Befestigungsbereich 58, 59 überdeckten Umfangsabschnitts 62, 64. In einer nicht gezeigten Ausführungsform liegt der von dem jeweils oberen Befestigungsbereich 58, 59 überdeckte Umfangsabschnitt 62, 64 innerhalb des von dem jeweils unteren Befestigungsbereich 60, 61 überdeckten Umfangsabschnitts 63, 65.

Beispielsweise kann eine Lücke 52, 54 von zwei Paaren jeweils gegeneinandergestellter Stützstreben 56, 57, 68, 69 sowie von zwei einzeln stehenden Stützstreben 56, 57 überbrückt sein.

Im gezeigten Ausführungsbeispiel beträgt außerdem die Höhe 72 einer jeweiligen Stützstrebe 56, 57, 68, 69 wenigstens 150 % ihrer jeweiligen Breite 73. Es sind Ausführungsformen möglich, bei denen die Höhe 72 einer jeweiligen Stützstrebe 56, 57, 68, 69 wenigstens 175 % und/oder wenigstens 200 % ihrer jeweiligen Breite 73 beträgt.

Die Stützstreben 56, 57, 68, 69 erweitern sich jeweils zu ihren Befestigungsbereichen 58, 59, 60, 61, 70, 71 hin und die jeweilige Erweiterung erstreckt sich über jeweils mehr als 15 % der Höhe 72 einer jeweiligen Stützstrebe 56, 57, 68, 69. Die Erweiterung kann sich auch jeweils über mehr als 20 %, und/oder weniger als 20 % und/oder weniger als 30 % der jeweiligen Höhe 72 einer jeweiligen Stützstrebe 56, 57, 68, 69 erstrecken.

Die jeweiligen Stützstreben 56, 57, 68, 69 weisen jeweils eine entlang ihres Verlaufs in Axialrichtung veränderliche Querschnittsfläche auf. Diese Veränderlichkeit ergibt sich beispielsweise daraus, dass sich eine jeweilige Stützstrebe sechsten 56, 57, 68, 69 zu ihrem Befestigungsbereich 58, 59, 60, 61 hin erweitert.

Ein durch jeweilige Außenseiten 75, 76 der Stützstreben 56, 57 einer jeweiligen Lücke 52, 54 definierter Kreisumfang 77, 78 ist für mehrere Lücken 52, 54 unterschiedlich groß, und zwar verkleinern sich die Kreisumfänge 77, 78 in einer Axialrichtung 39 des Einbauteils 1 und in einer Durchströmrichtung 40 eines Fluids. So ist der zur oberen Lücke 52 gehörende Kreisumfang 77 kleiner als der zur unteren Lücke 54 gehörende Kreisumfang 78.

Die jeweiligen Höhen 79, 80 mehrerer Lücken 52, 54 weichen voneinander ab und verkleinern sich in einer Axialrichtung 39 des Einbauteils 1 und einer Durchströmrichtung 40 eines Fluids. So ist die Höhe 79 der oberen Lücke 52 kleiner als die Höhe 80 der unteren Lücke 54.

Die jeweiligen Breiten 81, 82 der Stützstreben 56, 57, 68, 69 mehrerer Lücken 52, 54 weichen voneinander ab und verkleinern sich in einer Axialrichtung 39 des Einbauteils 1 und einer Durchströmrichtung 40 eines Fluids.

Die jeweiligen Tiefen 83, 84 der Stützstreben 56, 57, 68, 69 mehrerer Lücken 52,54 weichen voneinander ab und vergrößern sich in einer Axialrichtung 39 des Einbauteils 1 und einer Durchströmrichtung 40 eines Fluids.

Die Längsmittelachsen 85, 86 wenigstens zweier im selben Umfangsbereich 87 befindlicher Stützstreben 56, 57 wenigstens zweier, in diesem Ausführungsbeispiel benachbarter, Lücken 52, 54 sind außerdem parallel zueinander ausgerichtet. Die Längsmittelachsen 85, 86 sind außerdem parallel zu der Längsmittelachse 88 des Einbauteils 1 ausgerichtet.

Das gezeigte Einbauteil 1 ist in diesem Ausführungsbeispiel mittels eines Spritzgussverfahrens gefertigt.

Es wird somit ein sanitäres Einbauteil 1, welches beispielsweise als ein Ventil 2 und/oder ein Umstellventil 3 ausgeführt sein kann, und bei dem wenigstens ein Dichtring 9, 18, 19, 20, der beispielsweise als O-Ring ausgeführt sein kann, an einer Auflagefläche 10, 22 an einem Gehäuseteil 11, 21 des sanitären Einbauteils 1 aufliegt, und wobei die Auflagefläche 10, 22 wenigstens eine vorzugsweise umlaufende Rippe 12, 13, 14, 27, 28, 29, 30, 31, 32, 33, 34 aufweist. Außerdem wird eine Dichtverbindung 200 zwischen zwei stationären Teilen 11, 21, 100 vorgeschlagen, wobei wenigstens eines der Teile 11, 21, 100 ein Gehäuseteil 11, 21 eines sanitären Einbauteils 1 sein kann, wobei das sanitäre Einbauteil 1 ein erfindungsgemäßes sanitäres Einbauteil 1 sein kann, wobei zwischen die zwei Teile 11, 21, 100 ein Dichtring 9, 18, 19, 20 eingelegt ist, und wobei jedes der zwei Teile 11, 21, 100 eine Pressfläche 201, 202 für den Dichtring 9, 18, 19, 20 ausbildet, und wobei wenigstens eine der Pressflächen 201, 202 wenigstens eine vorzugsweise umlaufende Rippe 12, 13, 14, 27, 28, 29 30, 31, 32, 33, 34 aufweist. Ferner wird eine Sanitärarmatur 100 vorgeschlagen, welche ein erfindungsgemäßes sanitäres Einbauteil 1 und/oder eine erfindungsgemäße Dichtverbindung 200 aufweist, vgl. Fig. 1.

### Bezugszeichenliste

- 1: sanitäres Einbauteil
- 2: Ventil
- 3: Umstellventil
- 4: Gehäuse
- 5: Anlagefläche
- 6: Anlagefläche
- 7: Gewinde
- 8: Gewinde
- 9: Dichtring
- 10: Auflagefläche
- 11: Gehäuseteil
- 12: Rippe
- 13: Rippe
- 14: Rippe
- 15: Hülse
- 16: Ventilkörper
- 17: Mittelteil
- 18: Dichtring
- 19: Dichtring
- 20: Dichtring
- 21: Gehäuseteil
- 22: Auflagefläche
- 23: Gegenfläche
- 24: Nutgrund
- 25: Nut
- 26: Nut
- 27: Rippe
- 28: Rippe
- 29: Rippe
- 30: Rippe
- 31: Rippe
- 32: Rippe
- 33: Rippe
- 34: Rippe
- 35: Querschnittsfläche
- 36: Querschnittsfläche
- 37: Querschnittsfläche
- 38: Querschnittsfläche
- 39: Axialrichtung
- 40: Durchströmrichtung
- 41: Höhe
- 42: Höhe
- 43: Höhe
- 44: Halbwertsbreite
- 45: Halbwertsbreite
- 46: Halbwertsbreite
- 47: Mitte
- 48: Außenseite
- 49: Außenseite
- 50: Oberteil
- 51: Unterteil
- 52: Lücke
- 53: Durchströmöffnung
- 54: Lücke
- 55: Durchströmöffnung
- 56: Stützstrebe
- 57: Stützstrebe
- 58: oberer Befestigungsbereich
- 59: oberer Befestigungsbereich
- 60: unterer Befestigungsbereich
- 61: unterer Befestigungsbereich
- 62: Umfangsabschnitt
- 63: Umfangsabschnitt
- 64: Umfangsabschnitt
- 65: Umfangsabschnitt
- 66: seitliche Begrenzung
- 67: seitliche Begrenzung
- 68: Stützstrebe
- 69: Stützstrebe
- 70: Befestigungsbereich
- 71: Befestigungsbereich
- 72: Höhe
- 73: Breite
- 74: Einlass
- 75: Außenseite
- 76: Außenseite
- 77: Kreisumfang
- 78: Kreisumfang
- 79: Höhe
- 80: Höhe
- 81: Breite
- 82: Breite
- 83: Tiefe
- 84: Tiefe
- 85: Längsmittelachse
- 86: Längsmittelachse
- 87: Umfangsbereich
- 88: Längsmittelachse
- 89: Auslass
- 90: Auslass
- 91: Handhabe
- 92: Rückstellelement
- 93: Nutgrund
- 100: Sanitärarmatur
- 101: Gegenfläche
- 150: Oberteil
- 151: Unterteil
- 200: Dichtverbindung
- 201: Pressfläche
- 202: Pressfläche

## Patentansprüche

1. Sanitäres Einbauteil (1), insbesondere Ventil (2), mit wenigstens einem Dichtring (9, 18, 19, 20), insbesondere einem O-Ring, der an einer Auflagefläche (10, 22) an einem Gehäuseteil (11, 21) des sanitären Einbauteils (1) aufliegt, **dadurch gekennzeichnet, dass** die Auflagefläche (10, 22) wenigstens eine vorzugsweise umlaufende Rippe (12, 13, 14, 27, 28, 29, 30, 31, 32, 33, 34) aufweist.

2. Sanitäres Einbauteil (1) nach dem vorangehenden Anspruch, **dadurch gekennzeichnet, dass** die Rippe (12, 13, 14, 27, 28, 29, 30, 31, 32, 33, 34) innerhalb einer Projektion des Dichtrings (9, 18, 19, 20) auf die Auflagefläche (10, 22) ausgebildet ist.

3. Sanitäres Einbauteil (1) nach einem der vorangehenden Ansprüche, **dadurch gekennzeichnet, dass** eine Gegenfläche (23) für den Dichtring (20) an einem weiterem Gehäuseteil (11, 21) vorgesehen ist.

4. Sanitäres Einbauteil (1) nach einem der vorangehenden Ansprüche, **dadurch gekennzeichnet, dass** der Dichtring (9, 18, 19, 20) vollständig durch Gehäuseteile (11, 21) eingeschlossen ist.

5. Sanitäres Einbauteil (1) nach einem der vorangehenden Ansprüche, **dadurch gekennzeichnet, dass** die Auflagefläche (10, 22) ein Nutgrund (24, 93) einer Nut (25, 26) ist.

6. Sanitäres Einbauteil (1) nach einem der vorangehenden Ansprüche, **dadurch gekennzeichnet, dass** an der Auflagefläche (10, 22) und/oder der Gegenfläche (23, 101) mehrere vorzugsweise umlaufende Rippen (12, 13, 14, 27, 28, 29, 30, 31, 32, 33, 34) ausgebildet sind.

7. Sanitäres Einbauteil (1) nach einem der vorangehenden Ansprüche, **dadurch gekennzeichnet, dass** der Dichtring (9, 18, 19, 20) ein erster Dichtring (9, 18, 19, 20) ist, der gegen eine Gegenfläche (23, 101) eines weiteren Gehäuseteils (11, 21) gepresst ist, und dass ein zweiter Dichtring (9, 18, 19, 20) vorgesehen ist, der an einer Auflagefläche (10, 22) mit wenigstens einer vorzugsweise umlaufenden Rippe (12, 13, 14, 27, 28, 29, 30, 31, 32, 33, 34) aufliegt und zur Abdichtung nach außen ausgebildet ist.

8. Sanitäres Einbauteil (1) nach einem der vorangehenden Ansprüche, **dadurch gekennzeichnet, dass** der Dichtring (9, 18, 19, 20) in Axialrichtung (39) des Einbauteils (1) und/oder quer zu der Gegenfläche (23, 101) und/oder in Durchströmrichtung (40) eines Fluids verpresst ist.

9. Sanitäres Einbauteil (1) nach einem der vorangehenden Ansprüche, **dadurch gekennzeichnet, dass** eine oder die vorzugsweise umlaufende Rippe (12, 13, 14, 27, 28, 29, 30, 31, 32, 33, 34) an der Auflagefläche (10, 22) und/oder der Gegenfläche (23, 101) zentriert und/oder mehrere vorzugsweise umlaufende Rippen (12, 13, 14, 27, 28, 29, 30, 31, 32, 33, 34) über die Auflagefläche (10, 22) und/oder die Gegenfläche (23, 101) verteilt sind.

10. Sanitäres Einbauteil (1) nach einem der vorangehenden Ansprüche, **dadurch gekennzeichnet, dass** mehrere vorzugsweise umlaufende Rippen (12, 13, 14, 27, 28, 29, 30, 31, 32, 33, 34), insbesondere der Auflagefläche (10, 22) und/oder der Gegenfläche (23, 101), voneinander abweichende Höhen (41, 42, 43) aufweisen.

11. Sanitäres Einbauteil (1) nach einem der vorangehenden Ansprüche, **dadurch gekennzeichnet, dass** wenigstens drei Rippen (12, 13, 14, 27, 28, 29, 30, 31, 32, 33, 34) an der Auflagefläche (10, 22) und/oder der Gegenfläche (23, 101) vorgesehen sind, insbesondere wobei eine mittlere Rippe (12, 13, 14, 27, 28, 29, 30, 31, 32, 33, 34) eine geringere Höhe (41, 42, 43) als eine oder die äußeren Rippen (12, 13, 14, 27, 28, 29, 30, 31, 32, 33, 34) aufweist.

12. Sanitäres Einbauteil (1) nach einem der vorangehenden Ansprüche, **dadurch gekennzeichnet, dass** die Höhe (41, 42, 43) einer, insbesondere jeder, Rippe (12, 13, 14, 27, 28, 29, 30, 31, 32, 33, 34) der Auflagefläche (10, 22) und/oder der Gegenfläche (23, 101) der Halbwertsbreite (44, 45, 46) der jeweiligen Rippe (12, 13, 14, 27, 28, 29, 30, 31, 32, 33, 34) entspricht und/oder dass die Höhe (41, 42, 43) einer jeweiligen Rippe (12, 13, 14, 27, 28, 29, 30, 31, 32, 33, 34) um weniger als 50 %, bevorzugt um weniger als 25 %, besonders bevorzugt um weniger als 10 %, von ihrer Halbwertsbreite (44, 45, 46) abweicht.

13. Sanitäres Einbauteil (1) nach einem der vorangehenden Ansprüche, **dadurch gekennzeichnet, dass** eine Höhenverteilung mehrerer Rippen (12, 13, 14, 27, 28, 29, 30, 31, 32, 33, 34) der Auflagefläche (10, 22) und/oder der Gegenfläche (23, 101) symmetrisch vorzugsweise zu der Mitte (47) der Auflagefläche (10, 22) und/oder der Gegenfläche (23, 101) ist.

14. Sanitäres Einbauteil (1) nach einem der vorangehenden Ansprüche, **dadurch gekennzeichnet, dass** die Höhen (41, 42, 43) mehrerer Rippen (12, 13, 14, 27, 28, 29, 30, 31, 32, 33, 34) von der Mitte (47) der Auflagefläche (10, 22) und/oder der Gegenfläche (23, 101) zu einer Außenseite (48, 49) der Auflagefläche (10, 22) und/oder der Gegenfläche (23, 101) hin zunehmen.

15. Sanitäres Einbauteil (1) nach einem der vorangehenden Ansprüche, **dadurch gekennzeichnet, dass** das Einbauteil (1) mittels eines Spritzgussverfahrens gefertigt ist.

16. Sanitäres Einbauteil (1) nach einem der vorangehenden Ansprüche, **dadurch kennzeichnet, dass** das Einbauteil (1) als Umstellventil (3) ausgebildet ist.

17. Sanitäres Einbauteil (1) nach einem der vorangehenden Ansprüche, **dadurch gekennzeichnet, dass** ein Einlass (74) und/oder Auslass (89, 90) des Einbauteils (1) radial zu und/oder parallel zu der Längsmittelachse (88) des Einbauteils (1) ausgerichtet ist.

18. Dichtverbindung (200) zwischen zwei stationären Teilen (11, 21, 100), insbesondere wobei wenigstens eines der Teile (11, 21, 100) ein Gehäuseteil (11, 21) eines sanitären Einbauteils (1), insbesondere eines sanitären Einbauteils (1) nach einem der vorangehenden Ansprüche, ist, wobei zwischen die zwei Teile (11, 21, 100) ein Dichtring (9, 18, 19, 20) eingelegt ist, und jedes der zwei Teile (11, 21, 100) eine Pressfläche (201, 202) für den Dichtring (9, 18, 19, 20) ausbildet, **dadurch gekennzeichnet, dass** wenigstens eine der Pressflächen (201, 202) wenigstens eine vorzugsweise umlaufende Rippe (12, 13, 14, 27, 28, 29, 30, 31, 32, 33, 34) aufweist.

19. Sanitärarmatur (100) mit einem sanitären Einbauteil (1) nach einem der Ansprüche 1 bis 17 und/oder einer Dichtverbindung (200) nach Anspruch 18.
